# EUROPÄISCHE PATENTSCHRIFT

(11) **EP 1 979 152 B1**
(45) Veröffentlichungstag und Bekanntmachung des Hinweises auf die Patenterteilung: **27.01.2010**
(21) Anmeldenummer: 06818764.0
(22) Anmeldetag: 23.11.2006
(51) Int. Cl.: B29C 49/04, B29D 23/20, B29B 11/14, B65D 17/50, B65D 1/02

(54) **HALBZEUG ZUR HERSTELLUNG EINER KUNSTSTOFFTUBE SOWIE HERSTELLUNGSVERFAHREN, UND DARAUS HERGESTELLTE TUBE AUS KUNSTSTOFF**
SEMIFINISHED PRODUCT FOR PRODUCING A PLASTIC TUBE, METHOD OF PRODUCTION OF SUCH PRODUCT AND TUBE OF PLASTIC PRODUCED FROM IT
ÉBAUCHE DESTINÉE À LA FABRICATION D'UN TUBE EN MATIÈRE SYNTHÉTIQUE, PROCÉDÉ DE FABRICATION D'UNE TELLE ÉBAUCHE ET TUBE EN MATIÈRE SYNTHÉTIQUE FABRIQUÉ À PARTIR DE CETTE ÉBAUCHE

(30) Priorität: 20.12.2005 CH 20142005
(43) Veröffentlichungstag der Anmeldung: 15.10.2008
(73) Patentinhaber: Alpla Werke Alwin Lehner GmbH & CO. KG, 6971 Hard (AT)
(72) Erfinder: KÜNZ, Johann, A-6971 Hard (AT)
(74) Vertreter: Hasler, Erich
(86) Internationale Anmeldenummer: PCT/EP2006/011241
(87) Internationale Veröffentlichungsnummer: WO 2007/071304

(56) Entgegenhaltungen:
- EP-A- 0 573 180
- EP-A- 1 362 685
- WO-A-01/89940
- US-A- 4 598 839
- US-A- 5 431 292
- US-A1- 2003 197 019

## Beschreibung

Die Erfindung betrifft ein Halbzeug zur Herstellung einer Kunststofftube, welches in einem Extrusionsblasverfahren hergestellt wird, und eine daraus hergestellte, gefüllte Kunststofftube gemäss den jeweiligen Oberbegriffen der gattungsbildenden unabhängigen Patentansprüche.

Die in der Vergangenheit üblichen Behältnisse aus Weiss- oder Buntblech, aus Glas oder auch aus Keramik werden in zunehmendem Masse von Behältnissen aus Kunststoff abgelöst. Dies betrifft insbesondere auch tubenartige Behältnisse, die vorher oft aus metallischen Folien hergestellt wurden. Das geringe Gewicht und die geringeren Kosten spielen sicher eine nicht unerhebliche Rolle bei dieser Substitution. Auch die Rezyklierbarkeit der eingesetzten Kunststoffe ist ein nicht unerheblicher Faktor bei der zunehmenden Akzeptanz von Kunststoffbehältnissen beim Endverbraucher.

Die US 2003/0197019 beschreibt eine Verpackung für flüssige, halbflüssige oder pastöse Nahrungsmittel, welche einen Körper aus einem deformierbaren Material besitzt. Die Verpackung hat ein domartiges Mundstück, welches zwei stabile Positionen einnehmen kann, nämlich eine zurückgezogene Position, in welcher das Mundstück in den Körper zurückgezogen ist und einen Hohlraum definiert, und eine ausgefahrene Position, in welcher das Mundstück zumindest teilweise über den Körper hinaus ragt, um die Konsumierung des Produktes zu ermöglichen. In der zurückgezogenen Position des Mundstücks schützt eine Versiegelung besagten Hohlraum. Diese muss zuerst entfernt werden, um das Mundstück durch Druck auf den Verpackungskörper von der zurückgezogenen in die ausgefahrene Position zu bringen. Ein am Mundstück angeformter zylindrischer Fortsatz ist durch ein Endstück mit vier flügelförmigen Fortsätzen verschlossen. Zum Öffnen der Verpackung wird das Endstück mit Hilfe der flügelförmigen Fortsetzung abgedreht, wonach eine kreisförmige Öffnung des Körpers vorliegt.

Gemäss US 2003/0197019 kann die Verpackung durch Spritzblasen oder durch Spritzgiessen hergestellt sein.

Die US 4,598,839 zeigt eine sicherheitsverpackte Quetschtube, die einen lang gestreckten, an einem Ende verschlossenen Tubenkörper mit flexiblen Wänden hat Am anderen Ende der Tube befindet sich ein Hals mit einer Auspressöffnung mit einem äusseren Schraubengewinde für einen aufschraubbaren Deckel. Die Auspressöffnung ist mit einer zerstörbaren Versiegelung verschlossen, die auf der Öffnung angebracht ist. Die Versiegelung ist als flexible kuppelförmige Kappe ausgeführt. An der kuppelförmigen Kappe ist an der Aussenseite ein stäbchenförmiger Fortsatz angebracht, mit dessen Hilfe sich die kuppelförmige Kappe abreissen lässt.

Der stäbchenförmige Fortsatz hat die Funktion, einerseits im Zusammenwirken mit dem Deckel ein Hineindrücken der Kappe in den Tubenkörper und andererseits ein Abreissen der Versiegelung durch eine Kippbewegung zu ermöglichen. An der Aussenseite des Halses ist ein Schraubengewinde vorgesehen, welche mit einem entsprechenden Gewinde eines Deckels zusammenwirken kann. Die Tube ist entsprechend für den mehrmaligen Gebrauch bestimmt.

Behältnisse zur Aufbewahrung und einmaligen Bereitstellung beispielsweise von ... Haarfärbemitteln und dergleichen, deren Inhalt für den einmaligen Gebrauch vorgesehen ist, müssen nach der einmaligen Verwendung entsorgt werden. Dabei besteht grosses Interesse daran, das vom entleerten Behältnis eingenommene Volumen möglichst klein zu halten. Diese Auflage kann insbesondere von tubenartigen Behältnissen aus Kunststoff bestens erfüllt werden. Gerade bei derartigen Einmalprodukten besteht der Wunsch, den Herstellaufwand und die Herstellkosten für das nach der einmaligen Verwendung zu entsorgende Behältnis möglichst gering zu halten. Die tubenförmigen Behältnisse sollen in einem an sich bekannten Extrusionsblasverfahren herstellbar sein, welches bei der Herstellung grosse Freiheitsgrade hinsichtlich der einsetzbaren Kunst stoffe, der Schichtabfolgen und der Formgebung gewährleistet. Dabei sollen die tubenförmigen Behältnisse in gewohnter Weise handhabbar, insbesondere vom Abfüller befüllbar und verschliessbar sein. Auf wiederverschliessbare Deckel oder Verschlüsse soll verzichtet werden können. Die Funktion des tubenartigen Behältnisses soll für den Endverbraucher selbsterklärend sein, und die einmalige Entleerung des Behältnisses ohne Mühe bewerkstelligbar sein. Dabei soll auch dem Umstand Rechnung getragen werden, dass dauerhafte Haarfärbemittel üblicherweise in Kombination mit einem Entwickler angeboten werden, der meist in einer separaten Flasche angeordnet ist. Vor der Anwendung müssen der Tubeninhalt und der Entwickler miteinander vermischt werden. Erst in Verbindung mit dem Entwickler entfaltet das Haarfärbemittel die gewünschte Wirkung. Es soll daher auch eine Tube geschaffen werden, welche eine vereinfachte und verschmutzungsfreie Mischung des in der Tube enthaltenen Farbstoffes und eines Entwicklers ermöglicht.

Die Lösung dieser Aufgaben besteht in einem im Extrusionsblasverfahren herstellbaren Halbzeug zur Herstellung von Kunststofftuben und in aus dem Halbzeug hergestellten, gefüllten Tube aus Kunststoff, welche jeweils die im kennzeichnenden Abschnitt der zugehörigen unabhängigen Patentansprüche aufgelisteten Merkmale aufweisen. Weiterbildungen und/oder vorteilhafte Ausführungsvarianten der Erfindung sind Gegenstand der abhängigen Patentansprüche.

Gemäss der Erfindung wird ein Halbzeug zur Herstellung von Kunststofftuben mit einem im wesentlichen zylindrischen Körper geschaffen, dessen eines Längsende in ein Kopfteil mit einer verschliessbaren Auspressöffnung übergeht und dessen anderes Längsende offen ausgebildet ist. Das Halbzeug ist in einem Extrusionsblasverfahren hergestellt, bei dem ein- oder mehrschichtig extrudierter Kunststoffschlauch in einer Blasform gemäss der Blasformkavität aufgeblasen wird. Die im Kopfteil vorgesehene Auspressöffnung ist mit einem Einwegverschluss versehen, der während des Aufblasvorgangs innerhalb der Blasform erstellt worden ist.

Das erfindungsgemässe Halbzeug ist bereits mit einem Einwegverschluss versehen und wird in dieser Form an einen Abfüller geliefert. Dieser muss nur noch die vorgesehene Menge einer pastösen Masse durch das offene Längsende in den Körper des Halbzeugs abfüllen und danach das offene Ende des Körpers verschliessen. Dies erfolgt üblicherweise durch Zusammenquetschen und Verschweissen eines Endabschnitts des offenen Längsendes des Körpers. Es kann aber auch vorgesehen sein, dass das offene Ende des Körpers nach dem Abfüllen durch Versiegeln oder durch Kleben verschlossen wird. Für den Abfüller ergibt sich bei Verwendung des erfindungsgemässen Halbzeugs der Vorteil, nur mehr Abfüllen und Verschliessen zu müssen. Aufwendige und kostspielige Anlagen, in denen extrudiert, geblasen, gefüllt und verschlossen wird, entfallen. Auch der-Aufwand für den Betrieb, die Wartung und die Reparatur der benötigten Anlagen verringert sich dadurch. Die Herstellung des Halbzeugs erfolgt bei darauf spezialisierten und entsprechend ausgerüsteten Unternehmen. Sie ist vereinfacht und verbilligt, indem auf eine wiederverschliessbare Öffnung verzichtet wird und ein Einwegverschluss vorgesehen wird. Dadurch kann der Kopfabschnitt weit einfacher ausgebildet sein. Der Einwegverschluss wird bereits bei der Herstellung des Halbzeugs, während des Aufblasens innerhalb der Blasform erstellt. Die Herstellung des Halbzeugs erfolgt in einem erprobten Extrusionsblasverfahren aus einem ein- oder mehrschichtig extrudierten Kunststoffschlauch.

Der Endverbraucher erhält eine Kunststofftube mit einem Einwegverschluss. Gerade bei Produkten zur Einmalanwendung ist dadurch die Wahrscheinlichkeit vergrössert, dass auch wirklich der gesamte Inhalt der Tube verwendet wird, um den gewünschten Effekt zu erzielen. Falsch verstandene "Sparsamkeit", die zu einem unbefriedigenden und nicht erwünschten Ergebnis führen könnte, wird verhindert, da der Endverbraucher ja die Tube nicht mehr verschliessen kann. Durch den Verzicht auf einen wiederaufschraubbaren Verschluss wird auch das Volumen des nach dem Gebrauch zu entsorgenden Behältnisses reduziert.

Eine sehr vorteilhafte Ausführungsvariante der Erfindung sieht vor, bei dem Halbzeug einen Drehknebelverschluss als Einwegverschluss auszubilden. Derartige Drehknebelverschlüsse sind beispielsweise bereits von Soft-Drink-Flaschen bekannt und erprobt. Der Drehknebelverschluss ist ein integraler Bestandteil des Kopfteils des Halbzeugs. Er ist einstückig mit dem Kopfteil ausgebildet und besteht aus dem selben Material wie der Körper und das Kopfteil des Halbzeugs und wird bereits während des Blasvorganges innerhalb der Formkavität der Blasform hergestellt. Dies hat den Vorteil, dass der Endverbraucher bei der Entsorgung der ausgequetschten Tube den abgedrehten Verschluss und die Tube gemeinsam entsorgen kann, da sie ja aus dem selben Material bestehen.

Der Drehknebelverschluss weist einen Kappenabschnitt auf, der über einen als Sollbruchstelle ausgebildete geschwächten Bereich einstückig mit dem die Auspressöffnung berandenden Abschnitt des Kopfteils verbunden ist. Von der Aussenseite des Kappenabschnitts ragt ein Greifabschnitt ab. Zum Öffnen wird der Körper der Kunststofftube mit einer Hand gehalten und der Greifabschnitt mit Daumen und Zeigefinger der anderen Hand ergriffen. Durch relatives Verdrehen des Drehknebels zum Körper bricht der als umlaufende Sollbruchstelle ausgebildete geschwächte Bereich des Kopfteils auf, und der Kappenabschnitt kann abgehoben werden. Die Auspressöffnung liegt nun frei, und der Tubeninhalt kann durch die Auspressöffnung ausgegeben werden.

Der Drehknebelverschluss wird mit Vorteil bereits beim Extrusionsblasen des erfindungsgemässen Halbzeugs hergestellt. Dabei wird die umlaufende Sollbruchstelle in der Kavität der Blasform ausgebildet. Der Greifabschnitt ist von einem abgequetschten Abschnitt des extrudierten Kunststoffschlauchs gebildet. Die Herstellung des Drehknebelverschlusses während des Extrusionsblasvotgangs erfordert keinen zusätzlichen Arbeitsgang und erfordert keinen zusätzlichen Zeitaufwand!

Eine vorteilhafte Ausführungsvariante des Halbzeugs sieht vor, dass sein Kopfteil eine von der kreisrunden Form abweichende Aussenkontur aufweist und mit wenigstens einer Entlüfungsfläche versehen ist. Bei dauerhaften Haarfärbemitteln werden der Farbstoff in der Tube und ein Entwickler in einer Flasche als Set angeboten. Der in der Tube enthaltene Farbstoff muss mit dem Entwickler vermischt werden, bevor die Mischung angewendet werden kann. Die Halsweiten der Flasche und der Tube sind dabei mit Vorteil derart aufeinander abgestimmt, dass das Kopfteil der Tube in den Flaschenhals eingeführt werden kann. Bei der erfindungsgemässen Ausbildung erlaubt die wenigstens eine Entlüftungsfläche ein Entweichen der in der Flasche enhaltenen Luft, die beim Auspressen des Tubeninhalts in den in der Flasche enthaltenen Entwickler verdrängt wird. Dadurch kann eine Verunreinigung der Arbeitsfläche vermieden werden.

Das Halbzeug ist mit Vorteil aus einem mehrschichtig extrudierten Kunststoffschlauch geformt, der eine licht-, sauerstoff- und feuchtigkeitsundurchlässige Barriereschicht aufweist. Insbesondere bei der Ausführungsvariante des Halbzeugs mit Drehknebel ist der mehrschichtige Aufbau auch im Bereich der Verschlusskappe gewährleistet und kann eine 100 prozentige Barriere erzielt werden. In einer weiteren, sehr zweckmässigen Ausführungsvariante der Erfindung weist das aus einem mehrschichtig extrudierten Kunststoffschlauch geformte Halbzeug eine Getterschicht für Sauerstoff auf. Das mehrschichtig aufgebaute Halbzeug kann 3 bis 6 und auch mehr Schichten aufweisen. Es kann auch vorgesehen sein, dass wenigstens eine der Schichten aus regenerierten Kunststoffabfällen und -resten, sogenanntem Mühlenregenerat, besteht.

Weitere Vorteile und Merkmale ergeben sich aus der nachfolgenden Beschreibung eines Ausführungsbeispiels der Erfindung unter Bezugnahme auf die schematischen Zeichnungen. Es zeigen in nicht massstabsgetreuer Darstellung:
- Fig. 1: eine perspektivische Darstellung eines Ausführungsbeispiels des erfindungsgemässen Halbzeugs mit integral ausgebildetem Einwegverschluss;
- Fig. 2: eine Seitenansicht des Halbzeugs aus Fig. 1;
- Fig. 3: eine Schnittdarstellung des Kopfteils des Halbzeugs gemäss Fig. 1 und 2;
- Fig. 4: einen Querschnitt durch den Übergang des Einwegverschlusses zum Kopfteil des Halbzeugs;
- Fig. 5: einen Querschnitt des Kopfteils des Halbzeugs;
- Fig. 6: eine Seitenansicht einer aus dem Halbzeug gemäss Fig. 1-5 hergestellten gefüllten Kunststofftube; und
- Fig. 7: eine perspektivische Darstellung der Kunststofftube gemäss Fig. 6.

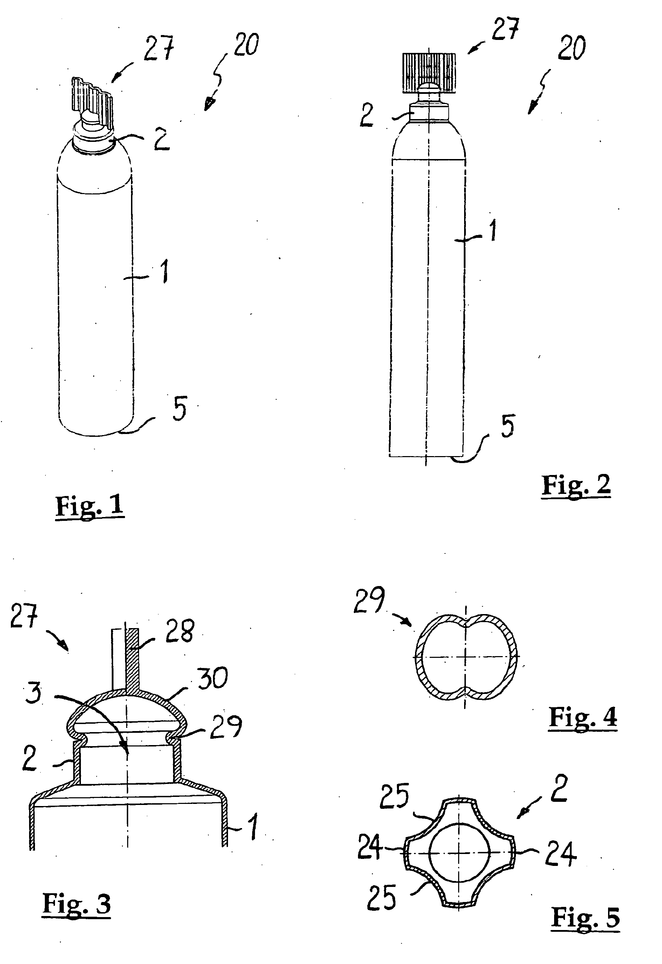

Fig. 1-5 zeigen ein Ausführungsbeispiel des erfindungsgemässen Halbzeugs in unterschiedlichen Ansichten und Aüsschnittsdarstellungen. Das Halbzeug trägt dabei gesamthaft das Bezugszeichen 20. Das im Extrusionsblasverfahren hergestellt Halbzeug 20 für die Herstellung einer Kunststofftube weist einen länglichen, im wesentlichen zylindrischen Körper 1 auf, an dessen eines Längsende ein Kopfteil 2 anschliesst. Das gegenüberliegende Längsende 5 des Körpers 1 ist offen ausgebildet. Zur Herstellung des Halbzeugs 20 wird mit einer Extrusionsdüse ein endloser, ein- oder mehrschichtiger Kunststoffschlauch extrudiert, geschnitten und durch Überdruck in einer Blasform gemäss der Formkavität aufgeblasen. Dabei wird auch das Kopfteil 2 des Halbzeugs 20 ausgebildet. Der Extrusions- und Aufblasvorgang erfolgt mit Hilfe von Extrusionsblasmaschinen, die aus dem Stand der Technik hinlänglich bekannt sind und die gleichzeitige Herstellung eine Vielzahl von Halbzeugen erlauben.

Das Kopfteil 2 weist eine Auspressöffnung 3 auf, die von einem Berandungsabschnitt umgeben ist. Die Auspressöffnung ist von einem einstückig mit dem Kopfteil 2 ausgebildeten Einwegverschluss verschlossen, der insbesondere als ein Drehknebelverschluss 27 ausgebildet ist. Der Drehknebelverschluss 27 weist einen Kappenabschnitt 30 auf, der über einen als Sollbruchstelle ausgebildeten geschwächten Bereich 29 mit dem die Auspressöffnung 3 berandenden Abschnitt des Kopfteils 2 verbunden ist. Vom Kappenabschnitt 30 ragt ein Greifabschnitt 28 ab, der eine flach gequetschte Gestalt aufweist und beispielsweise eine riffelartig gewellte Kontur besitzt. Der Greifabschnitt 28 erleichtert das Greifen des Drehknebelverschlusses 27, der zum Aufbrechen der Sollbruchstelle 29 gegenüber dem Kopfteil 2 verdreht wird. Die Herstellung des Drehknebelverschlusses 27 erfolgt während des Aufblasens des extrudierten Kunststoffschlauchs innerhalb der Formkavität der Blasform. Der Greifabschnitt 28 wird beispielsweise einfach durch Quetschen eines Schlauchabschnitts hergestellt.

Fig. 4 zeigt eine Ausführungsvariante des als Sollbruchstelle ausgebildeten geschwächten Bereichs 29 am Übergang vom Kappenabschnitt 30 zum Kopfteil 2. Beispielsweise sind Einschnürungen vorgesehen, die zu einer von der kreisrungen Querschnittsform abweichenden Querschnittskontur des geschwächten Bereichs 29 führen.

Fig. 5 zeigt einen Querschnitt des Kopfteils 2. Dieses weist eine von der kreisrunden Form abweichende Aussenkontur auf, die beispielsweise durch eine Abfolge von Dichtflächen 24 und Entlüftungsflächen 25 erzielt wird. Die Dichtfläche 24 weisen etwa den Krümmungsradius einer durchgehenden kreisrunden Aussenkontur auf. Die Entlüftungsflächen 25 verlaufen demgegenüber konkav eingebuchtet. Bei dauerhaften Haarfärbemitteln werden der Farbstoff in der Tube und ein Entwickler in einer Flasche als Set angeboten. Der in der Tube enthaltene Farbstoff muss mit dem Entwickler vermischt werden, bevor die Mischung angewendet werden kann. Die Halsweiten der Flasche und der Tube sind dabei mit Vorteil derart aufeinander abgestimmt, dass das Kopfteil der Tube in den Flaschenhals eingeführt werden kann. Bei der erfindungsgemässen Ausbildung sorgen die Dichtflächen 24 am Kopfteil 2 für eine Abstützung und eine gewisse dichtende Fixierung im Flaschenhals. Die konkaven Entlüftungsflächen 25 erlauben ein Entweichen der in der Flasche enhaltenen Luft, die beim Auspressen des Tubeninhalts in den in der Flasche enthaltenen Entwickler verdrängt wird. Dadurch kann eine Verunreinigung der Arbeitsfläche vermieden werden.

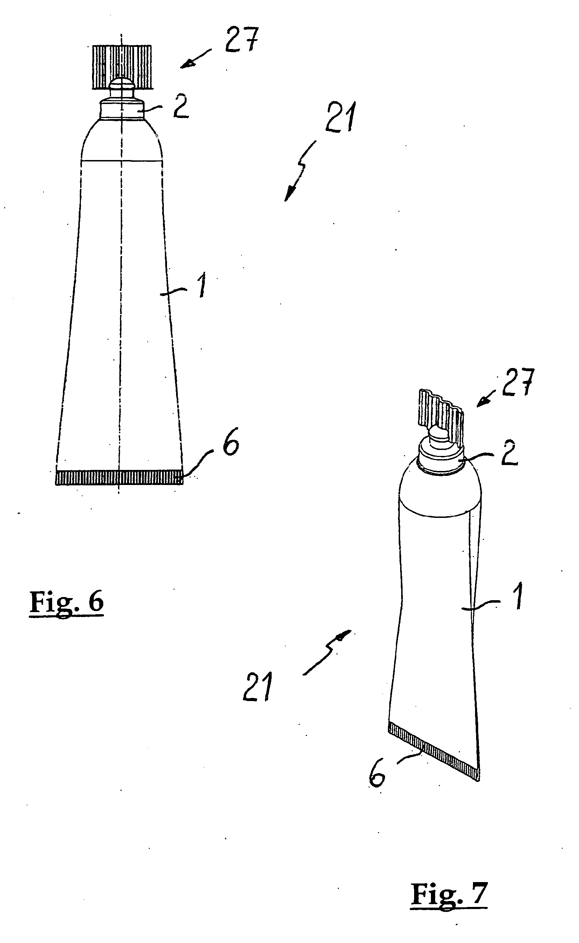

Das im Extrusionsblasverfahren mit dem integrierten Drehknebelverschluss 27 hergestellte Halbzeug 20 wird von einem Abfüller in gewohnter Weise durch das offene Längsende 5 des Körpers 1 mit einer pastösen Masse oder dergleichen, beispielsweise mit einem Haarfärbemittel, gefüllt. Danach wird das Längsende 5 geschlossen. Dies erfolgt beispielsweise durch Quetschen und Verschweissen oder auch durch Siegeln oder Verkleben und ist in Fig. 6 und 7 durch einen Quetsch-/Schweissabschnitt 6 angedeutet. Daraus ergibt sich die für eine gefüllte Kunststofftube 21 charakteristische Form. Fig. 6 und Fig. 7 zeigen dabei die Kunststofftube 21 mit intaktem Drehknebelverschluss 27. Durch eine Relativdrehung 27 des Drehknebelverschlusses zum Kopfteil des Körpers 1 werden die Sollbruchstellen aufgebrochen und die Auspressöffnung freigegeben. Der Inhalt der Kunststofftube 21 ist nach dem Öffnen bis auf eine minimale Restmenge einfach auspressbar.Der Drehknebelverschluss 27 besteht aus dem selben Material wie der Körper 1 der Kunststofftube 21 und kann nach dem Auspressen des Inhalts gemeinsam mit dieser entsorgt werden.

## Patentansprüche

1. Halbzeug zur Herstellung von Kunststofftuben mit einem im wesentlichen zylindrischen Körper (1), dessen eine Längsende in ein Kopfteil (2) mit einer durch einen Einwegverschluss (17; 27) verschlossenen Auspressöffnung (3) übergeht und dessen anderes Längsende (5) offen ausgebildet ist, **dadurch gekennzeichnet, dass** das Kopfteil (2) eine von der kreisrunden Form abweichenden Aussenkontur besitzt und wenigstens mit einer Entlüftungsfläche (25) ausgestattet ist und der Körper (1) im Blasverfahren gemäss einer Blasform aus einem ein- oder mehrschichtig extrudierten Kunststoffschlauch aufgeblasen und der Einwegverschluss (17; 27) während des Aufblasvorgangs innerhalb der Blasform erstellt ist.

2. Halbzeug nach Anspruch 1, **dadurch gekennzeichnet, dass** der Einwegverschluss (27) ein Drehknebelverschluss ist.

3. Halbzeug nach Anspruch 2, **dadurch gekennzeichnet, dass** der Drehknebelverschluss (27) ein integraler Bestandteil des Kopfteils (2) ist, einstückig mit dem Kopfteil (2) ausgebildet ist und aus dem selben Material wie der Körper (1) und das Kopfteil (2) besteht.

4. Halbzeug nach Anspruch 3, **dadurch gekennzeichnet, dass** der Drehknebelverschluss (27) einen Kappenabschnitt (30) aufweist, der über einen als Sollbruchstelle ausgebildeten geschwächten Bereich (29) einstückig mit dem die Auspressöffnung (3) berandenden Abschnitt (4) des Kopfteils (2) verbunden ist, und vom Kappenabschnitt (39) ein Greifabschnitt (28) abragt.

5. Halbzeug nach Anspruch 4, **dadurch gekennzeichnet, dass** die Sollbruchstelle (29) in der Kavität der Blasform hergestellt ist, und der Greifabschnitt (28) von einem abgequetschten Abschnitt des extrudierten Kunststoffschlauchs gebildet ist

6. Halbzeug nach einem der vorangehenden Ansprüche, **dadurch gekennzeichnet, dass** der extrudierte Kunststoffschlauch mehrschichtig ausgebildet ist und eine licht-, sauerstoffund feuchtigkeitsundurchlässige Barriereschicht aufweist.

7. Halbzeug nach einem der vorangehenden Ansprüche, **dadurch gekennzeichnet, dass** der extrudierte Kunststoffschlauch mehrschichtig ausgebildet ist und eine Getterschicht für Sauerstoff aufweist

8. Kunststofftube mit einem eine pastöse Masse enthaltenden länglichen Körper (1), dessen eine Längsende ein Kopfteil (2) mit einer einen Einwegverschluss (17; 27) aufweisenden Auspressöffnung (3)besitzt und dessen gegenüberliegendes Längsende (5) durch einen Quetsch-/Schweissabschnitt (6) verschlossen ist, **dadurch gekennzeichnet, dass** sie aus einem Halbzeug (10; 20) gemäss einem der vorangehenden Ansprüche 1-7 hergestellt ist, wobei der Quetsch-/ Schweissabschnitt (6) nach dem Befüllen des länglichen Körpers (1) mit der pastösen Masse erstellt ist.

9. Kunststofftube nach Anspruch 8, gefüllt mit einem Haarfärbemittel.

10. Verfahren zur Herstellung eines Halbzeugs als Zwischenstufe zur Herstellung einer Kunststofftube mit einem im wesentlichen zylindrischen Körper (1), dessen eine Längsende in ein Kopfteil (2) mit einer durch einen Einwegverschluss (17; 27) verschlossenen Auspressöffnung (3) übergeht und dessen anderes Längsende (5) offen ausgebildet ist, **dadurch gekennzeichnet, dass** der Körper (1) in einer Blasform gemäss einer Blasformkavität im Blasverfahren aus einem ein- oder mehrschichtig extrudierten Kunststoffschlauch aufgeblasen und der Einwegverschluss (17; 27), welcher ein integraler Bestandteil des Kopfteils (2) ist, während des Aufblasvorgangs einstückig mit dem Kopfteil (2) innerhalb der Blasform erstellt wird und, dass das Kopfteil mit einer von der kreisrunden Form abweichenden Aussenkontur und wenigstens mit einer Entlüftungsfläche (25) ausgebildet wird.

11. Verfahren nach Anspruch 10, **dadurch gekennzeichnet, dass** der Einwegverschluss (27) als ein Drehknebelverschluss 27), ausgebildet wird.

12. Verfahren nach Anspruch 10 oder 11, **dadurch gekennzeichnet, dass** der Drehknebelverschluss (27) mit einem Kappenabschnitt (30) ausgebildet wird, der über einen als Sollbruchstelle ausgebildete geschwächten Bereich (29) einstückig mit dem die Auspressöffnung (3) berandenden Abschnitt (4) des Kopfteils (2) verbunden ist, und vom Kappenabschnitt (39) ein Greifabschnitt (28) abragt, welcher Greifabschnitt (28) durch einen abgequetschten Abschnitt des extrudierten Kunststoffschlauchs gebildet ist.

## Claims

1. A semi-finished product for manufacturing plastic tubes, with an essentially cylindrical body (1), whose one longitudinal end merges into a head part (2) with a press-out opening (3) closed by a disposable closure (17; 27) and whose other longitudinal end (5) is designed in an open manner, **characterised in that** the head part (2) has an outer contour deviating from the circularly round shape and is provided with at least one bleed surface (25), and the body (1) is blown in the blowing method according to a blow mould, of a single-layered or multi-layered extruded plastic tubing and the disposable closure (17; 27) is created within the blow mould during the blowing procedure.

2. A semi-finished product according to claim 1, **characterised in that** the disposable closure (27) is a turn-buckle closure.

3. A semi-finished product according to claim 2, **characterised in that** the turn-buckle closure (27) is an integral component of the head part (2), is designed as one piece with the head part (2) and consists of the same material as the body (1) and the head part (2).

4. A semi-finished product according to claim 3, **characterised in that** the turn-buckle closure (27) comprises a cap section (30) which, via a weakened region (29) designed as breakage location, is connected as one piece to the section (4) of the head part (2), said section edging the press-out opening (3), and a grip section (28) projects away from the cap section (39).

5. A semi-finished product according to claim 4, **characterised in that** the breakage location (29) is created in the cavity of the blow mould, and the grip section (28) is formed by a squeezed section of the extruded plastic tubing.

6. A semi-finished product according to one of the preceding claims, **characterised in that** the extruded plastic tubing is designed in a multi-layered manner and has a light-impermeable, oxygen-impermeable and moisture-impermeable barrier layer.

7. A semi-finished product according to one of the preceding claims, **characterised in that** the extruded plastic tubing is designed in a multi-layered manner and comprises a getter layer for oxygen.

8. A plastic tube with an elongate body (1) containing a pasty mass, whose one longitudinal end has a head part (2) with a press-out opening (3) comprising a disposable closure (17, 27), and whole opposite longitudinal end (5) is closed by a squeeze section / weld section (6), **characterised in that** it is manufactured of a semi-finished product (10; 20) according to one of the preceding claims 1-7, wherein the squeeze section / weld section (6) is created after the filling of the elongate body (1) with the pasty mass.

9. A plastic tube according to claim 8, filled with a hair coloring agent.

10. A method for manufacturing a semi-finished product as an intermediate stage in the manufacture of a plastic tube, with an essentially cylindrical body (1), whose one longitudinal end merges into a head part (2) with a press-out opening (3) closed by a disposable closure (17; 27) and whose other longitudinal end (5) is designed in an open manner, **characterised in that** the body (1) is blown in a blow mould according to a blow mould cavity with the blow method, of a single-layered or multi-layered extruded plastic tubing, and the disposable closure (17; 27) which is an integral component the head part (2), is created as one piece with the head part (2) within the blow mould during the blowing procedure and that the head part (2) is formed with an outer contour deviating from the circularly round shape and with at least one bleed surface (25).

11. A method according to claim 10, **characterised in that** the disposable closure (27) is designed as a turn-buckle closure (27).

12. A method according to claim 10 or 11, **characterised in that** the turn-buckle closure (27) is designed with a cap section (30), which, via a weakened region (29) formed as a breakage location, is connected as one piece to the section (4) of the head part (2), said section edging the press-out opening (3), and a grip section (28) projects away from the cap section (39), said grip section being formed by a squeezed section of the extruded plastic tubing.

## Revendications

1. Demi-produit pour la fabrication de tubes en matière plastique avec un corps substantiellement cylindrique (1) dont l'une des extrémités longitudinales se fond en une partie de tête (2) avec une ouverture de sortie par pression (3) fermée par une fermeture à usage unique (17 ; 27) et dont l'autre extrémité longitudinale (5) est configurée ouverte, **caractérisé en ce que** la partie de tête (2) possède des contours extérieurs qui différent de la forme circulaire et est équipée au moins d'une surface d'aération (25) et le corps (1) est insufflé dans un procédé de soufflage selon un moule de soufflage à partir d'un tuyau extrudé en matière plastique en une ou plusieurs couches et la fermeture à usage unique (17 ; 27) est fabriquée à l'intérieur du moule de soufflage pendant le processus d'insufflation.

2. Demi-produit selon la revendication 1, **caractérisé en ce que** la fermeture à usage unique (27) est une fermeture à manette rotative.

3. Demi-produit selon la revendication 2, **caractérisé en ce que** la fermeture à manette rotative (27) est une partie intégrale de la partie de tête (2), est configurée en une pièce avec la partie de tête (2) et est constituée par la même matière que le corps (1) et la partie de tête (2).

4. Demi-produit selon la revendication 3, **caractérisé en ce que** la fermeture à manette rotative (27) présente une section de capuchon (30) qui est reliée en une partie à la section (4) de la partie de tête (2) qui forme le bord de l'ouverture de sortie par pression (3) par une zone amoindrie (29) configurée comme un endroit destiné à la rupture et qu'une section de prise (28) fait saillie de la section de capuchon (39).

5. Demi-produit selon la revendication 4, **caractérisé en ce que** l'endroit destiné à la rupture (29) est fabriqué dans la cavité du moule de soufflage et la section de prise (28) est formée par une section écrasée du tuyau extrudé en matière plastique.

6. Demi-produit selon l'une des revendications précédentes, **caractérisé en ce que** le tuyau extrudé en matière plastique est configuré en plusieurs couches et présente une couche barrière imperméable à la lumière, à l'oxygène et à l'humidité.

7. Demi-produit selon l'une des revendications précédentes, **caractérisé en ce que** le tuyau extrudé en matière plastique est configuré en plusieurs couches et présente une couche getter pour l'oxygène.

8. Tube en matière plastique avec un corps allongé (1) qui contient une masse pâteuse dont l'une des extrémités longitudinales présente une partie de tête (2) avec une ouverture de sortie par pression (3) qui présente une fermeture à usage unique (17 ; 27) et dont l'extrémité longitudinale opposée (5) est fermée par une section écrasée/soudée (6), **caractérisé en ce qu'**il est fabriqué à partir d'un demi-produit (10; 20) selon l'une des revendications précédentes 1 à 7, la section écrasée/soudée (6) étant fabriquée après le remplissage du corps allongé (1) avec la masse pâteuse.

9. Tube en matière plastique selon la revendication 8, rempli avec un colorant pour cheveux.

10. Procédé de fabrication d'un demi-produit comme étape intermédiaire pour la fabrication d'un tube en matière plastique avec un corps substantiellement cylindrique (1) dont l'une des extrémités longitudinales se fond en une partie de tête (2) avec une ouverture de sortie par pression (3) fermée par une fermeture à usage unique (17 ; 27) et dont l'autre extrémité longitudinale (5) est configurée ouverte, **caractérisé en ce que** le corps (1) est insufflé dans un moule de soufflage selon une cavité du moule de soufflage dans un procédé de soufflage à partir d'un tuyau extrudé en matière plastique en une ou plusieurs couches et la fermeture à usage unique (17 ; 27) qui est une partie intégrale de la partie de tête (2) est fabriquée pendant le processus d'insufflation en une pièce avec la partie de tête (2) à l'intérieur du moule de soufflage et que la partie de tête est configurée avec des contours extérieurs qui différent de la forme circulaire et au moins avec une surface d'aération (25).

11. Procédé selon la revendication 10, **caractérisé en ce que** la fermeture à usage unique (27) est configurée comme une fermeture à manette rotative (27).

12. Procédé selon la revendication 10 ou 11, **caractérisé en ce que** la fermeture à manette rotative (27) est configurée avec une section de capuchon (30) qui est reliée en une partie à la section (4) de la partie de tête (2) qui forme le bord de l'ouverture de sortie par pression (3) par une zone amoindrie configurée comme un endroit destiné à la rupture et qu'une section de prise (28) fait saillie de la section de capuchon (39), laquelle section de prise (28) est formée par une section écrasée du tuyau extrudé en matière plastique.
